# EUROPEAN PATENT APPLICATION

(11) **EP 4 843 633 A1**
(43) Date of publication of application: **25.11.2026**
(21) Application number: 24956003.8
(22) Date of filing: 28.11.2024
(51) Int. Cl.: A62C 3/16, H01M 10/6556, H01M 10/6561, H01M 10/6567, H01M 10/6568, A62C 31/00

(54) **BATTERY CLUSTER AND BATTERY ENERGY STORAGE SYSTEM**

(30) Priority: 30.09.2024 CN 202422422856 U
(71) Applicant: Eve Energy Co., Ltd., Huizhou, Guangdong 516006 (CN)
(72) Inventor: ZHENG, Shuo, Guangdong 516006 (CN); ZHAO, Zihui, Guangdong 516006 (CN); YI, Haohao, Guangdong 516006 (CN)
(74) Representative: Berggren Oy
(86) International application number: PCT/CN2024/135178
(87) International publication number: WO 2026/065730

(57) **Abstract**

The present application provides a battery module and a battery energy-storage system. The battery module comprises a battery rack, a plurality of battery packs, a high-voltage box, and a fire suppression system. The plurality of battery packs are mounted on the battery rack and are interconnected with high-voltage cables. The high-voltage box is mounted on the battery rack and is connected to the interconnected battery packs with high-voltage cables. The fire suppression system is mounted on the battery rack.

## Description

The present disclosure requires No. 202422422856X filed September 30, 2024, before the China National Intellectual Property Administration

Benefit of the Chinese patent application, the entire contents of which is incorporated herein by reference.

### TECHNICAL FIELD

The present disclosure relates to the field of battery energy-storage technologies, and in particular, to battery cluster and a battery energy-storage system.

### BACKGROUND

A battery energy-storage system consists of prefabricated compartments, battery clusters, a fire suppression system, a liquid cooling system, and an electrical system. In particular, a battery cluster is a core part, which is formed by a plurality of battery packs and connected in series with a high-voltage box, and the battery cluster is mounted on a battery rack to form a single unit. The entire energy-storage system is established by a plurality of battery clusters connected in series.

In the related art, the entire battery energy-storage system is usually integrated with a fire suppression device. The fire suppression system at the level of the battery energy-storage system is not integrated when individual battery cluster is verified, authenticated or tested; in addition, during the normal operation of the battery energy-storage system, the fire suppression device responds to the entire battery energy-storage system.

### TECHNICAL PROBLEM

However, such configuration leaves the individual battery cluster without fire protection, which induces a potential safety hazard during the verification, certification or test of the individual battery cluster. Furthermore, during the normal operation of the battery energy-storage system, it is impossible to activate fire suppression functions for individual battery clusters independently. Consequently, fires resulting from thermal runaway at the module level and the propagation of thermal runaway cannot be effectively managed, which can easily lead to an escalation of thermal runaway and its propagation, and the severity of fire, thereby compromising the safety performance of the battery clusters, triggering safety incidents, endangering personal safety, and causing economic losses.

### TECHNICAL SOLUTION

According to a first aspect, the present disclosure provides a battery cluster, comprising:
a battery rack;
a plurality of battery packs, disposed on the battery rack, wherein the plurality of battery packs are interconnected to each other with high-voltage cables;
a high-voltage box, disposed on the battery rack and configured to be connected to the plurality of interconnected battery packs with high-voltage cables; and
a fire suppression system disposed on the battery rack.

According to a second aspect, the present disclosure further provides a battery energy-storage system comprising the afore-mentioned battery clusters.

### BENEFICIAL EFFECTS

According to the battery cluster provided by the present disclosure, the battery cluster includes a battery rack, a plurality of battery packs, a high-voltage box, and a fire suppression system, wherein the plurality of battery packs are disposed on the battery rack, the plurality of battery packs are interconnected to each other with high-voltage cables; the high-voltage box is disposed on the battery rack, and connected to the plurality of interconnected battery subboxes with high-voltage cables, and the fire suppression system is disposed on the battery rack. By means of integrating a fire suppression system independently within each battery cluster, thermal management has been realized at the level of battery cluster, thereby enhancing the safety of individual cell modules.

According to the battery energy-storage system provided by the present disclosure, the battery energy-storage system includes the afore-mentioned battery clusters in which the fire suppression system is independently integrated, so that thermal safety management at the level of battery cluster is embodied, and safety of individual battery cluster is improved.

### BRIEF DESCRIPTION OF THE DRAWINGS

FIG. 1 is a structurally perspective view of a battery cluster according to the present disclosure;
FIG. 2 is a structurally perspective view of the battery cluster in FIG. 1 viewed from another perspective;
FIG. 3 is a structurally front view of the battery cluster in FIG. 1;
FIG. 4 is a structurally left-side view of the battery cluster in FIG. 1;
FIG. 5 is a structurally right-side view of the battery cluster in FIG. 1;
FIG. 6 is a structurally top view of the battery cluster in FIG. 1;
FIG. 7 is a structurally bottom view of the battery cluster in FIG. 1;
FIG. 8 is a structurally perspective view of the battery cluster in FIG. 1 (without a fire suppression system and a liquid cooling system);
FIG. 9 is a perspective view of a partial structure in FIG. 8;
FIG. 10 is a structurally perspective view of the fire suppression system in FIG. 1;
FIG. 11 is a structurally perspective view of the fire suppression system in FIG. 10 viewed from another perspective;
FIG. 12 is a structurally perspective view of the liquid cooling system in FIG. 1;
FIG. 13 is a structurally front view of the battery rack in FIG. 1;
FIG. 14 is a structurally front view of the battery cluster in FIG. 13;
FIG. 15 is a top view of the battery cluster in FIG. 13.

### REFERENCE NUMERAL

100, battery cluster; 1, battery rack; 11, rack body; 12, foot structure; 121, mounting hole; 122, grounding point; 13, first guide rail group; 131, first mounting guide rail; 14, second guide rail group; 141, second mounting guide rail; 2, battery pack; 21, gas fire-suppression inlet; 22, liquid-cooling inlet; 23, liquid-cooling outlet; 24, grounding terminal; 3, high-voltage cable; 4, high-voltage box; 5, fire suppression system; 51, in-packet type gas fire-suppression device; 511, fire-suppression gas cylinder; 512, fire-suppression gas pipeline; 52, aerosol fire-extinguishing device; 53, water spray fire-extinguishing device; 531, fire-suppression water pipeline; 532, spraying head; 54, fire-suppression power supply; 55, fire-suppression host; 6, liquid cooling system; 61, liquid-cooling pipeline; 611, primary water inlet pipeline; 612, secondary water inlet pipeline; 613, secondary water return pipeline; 614, primary water return pipeline; 62, liquid-cooling unit; 63, water supply tank; 7, signal line.

### DETAILED DESCRIPTION

In the description of the present disclosure, unless otherwise expressly specified and defined, the terms "connected", "connected", and "fixed" should be understood in a broad sense, for example, it may be a fixed connection, a detachable connection, or an integral connection; it may be a mechanical connection or an electrical connection; it may be a direct connection or an indirect connection through an intermediate medium; it may be an internal communication between two elements or an interaction relationship between two elements. A person of ordinary skill in the art may understand specific meanings of the foregoing terms in this application based on a specific situation.

In the present disclosure, unless otherwise expressly specified and defined, a first feature being "on" or "under" a second feature may include that the first feature and the second feature are in direct contact, or may include that the first feature and the second feature are not in direct contact but are in contact through another feature therebetween. In addition, that the first feature is "on", "above", and "on top of" the second feature includes that the first feature is directly above and obliquely above the second feature, and a horizontal height of the first feature is higher than that of the second feature. The first feature is "below", "under" and "lower" the second feature includes that the first feature is directly below and obliquely below the second feature, and a horizontal height of the first feature is lower than that of the second feature.

In the description of the present embodiment, the orientation or positional relationship of the terms "upper", "lower", "left", "right", "front", "rear" and the like is based on the orientation or positional relationship shown in the drawings, which is for the convenience of description and simplification of operation, rather than indicating or implying that the device or element referred to must have a particular orientation, be constructed and operated in a particular orientation, and therefore cannot be construed as limiting the present application. In addition, the terms "first", "second" are used for descriptive purposes only, and have no special meanings.

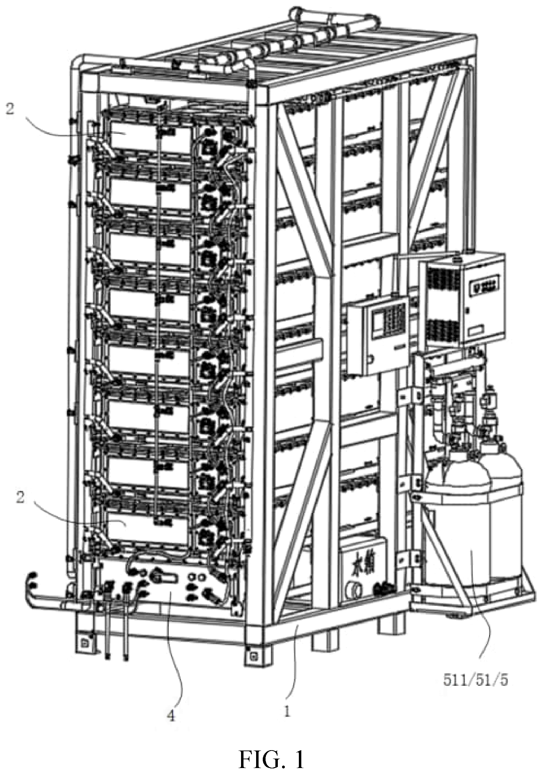

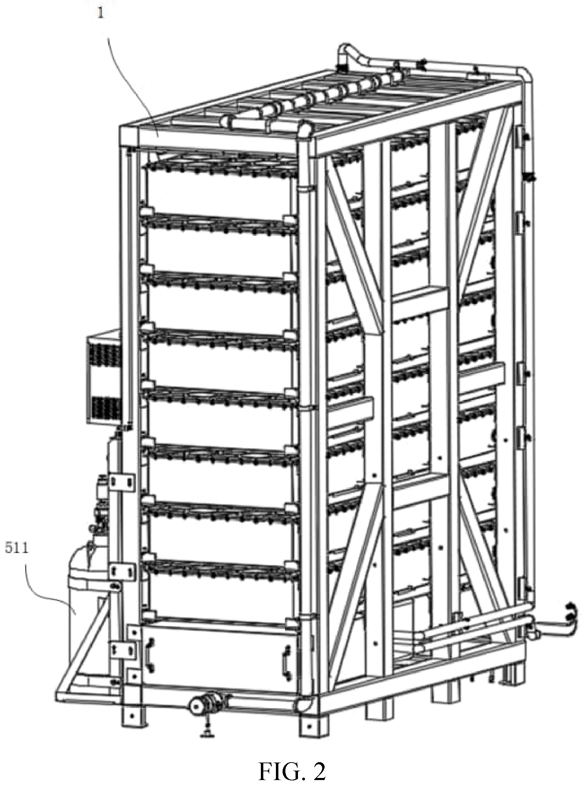

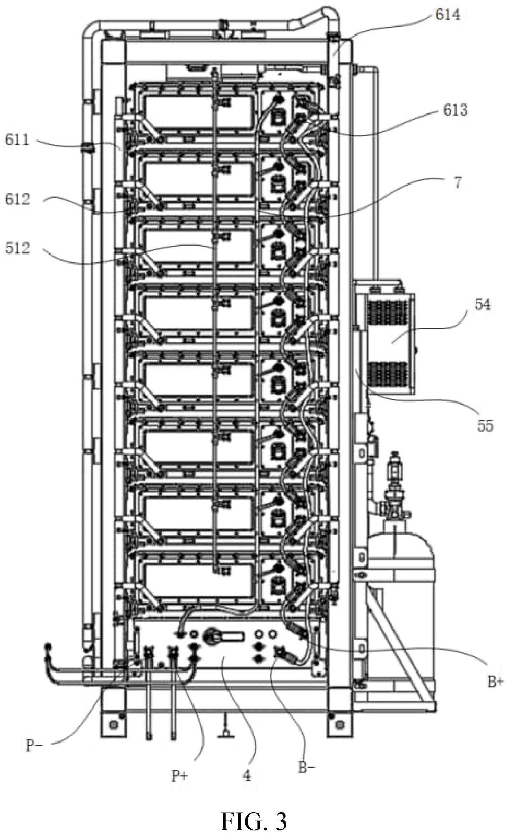

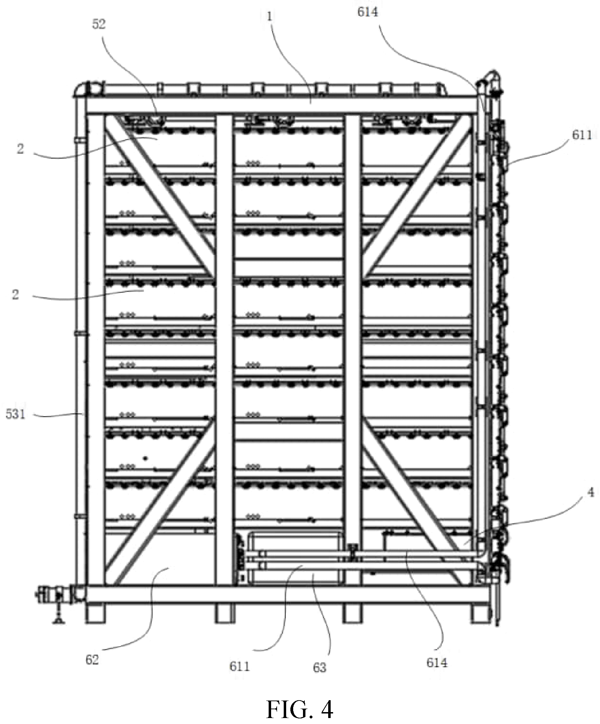

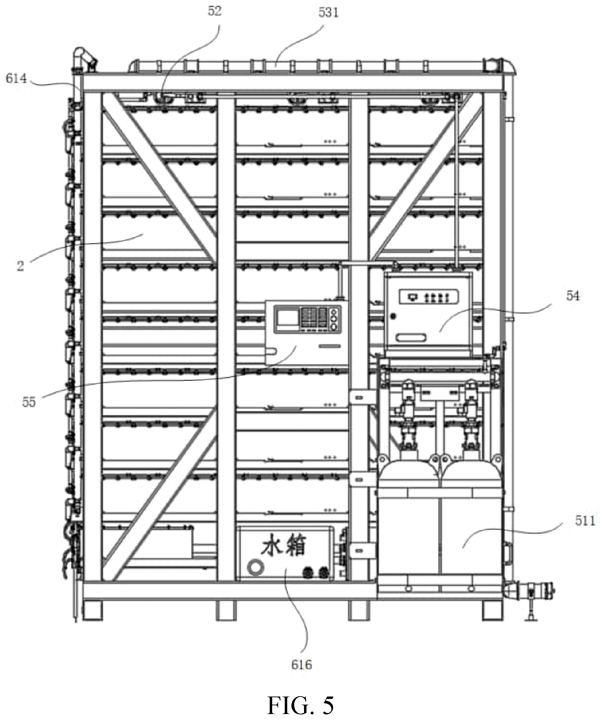

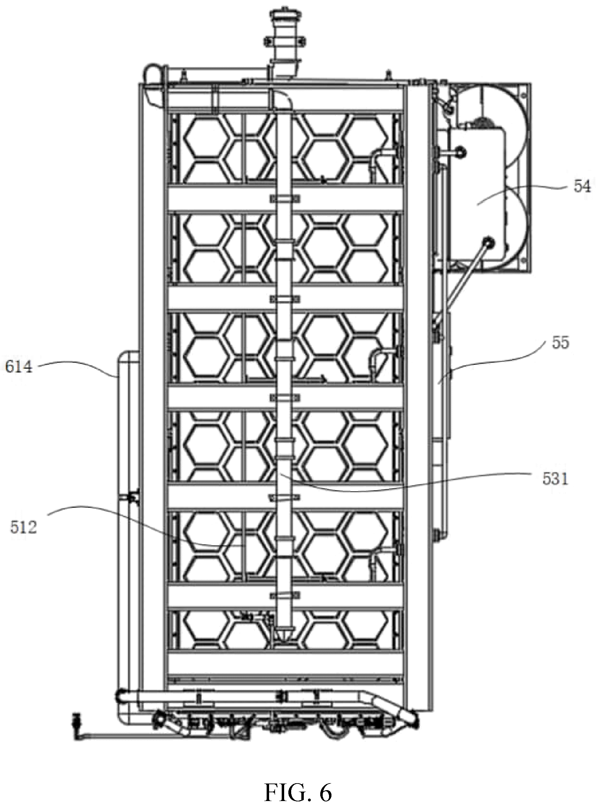

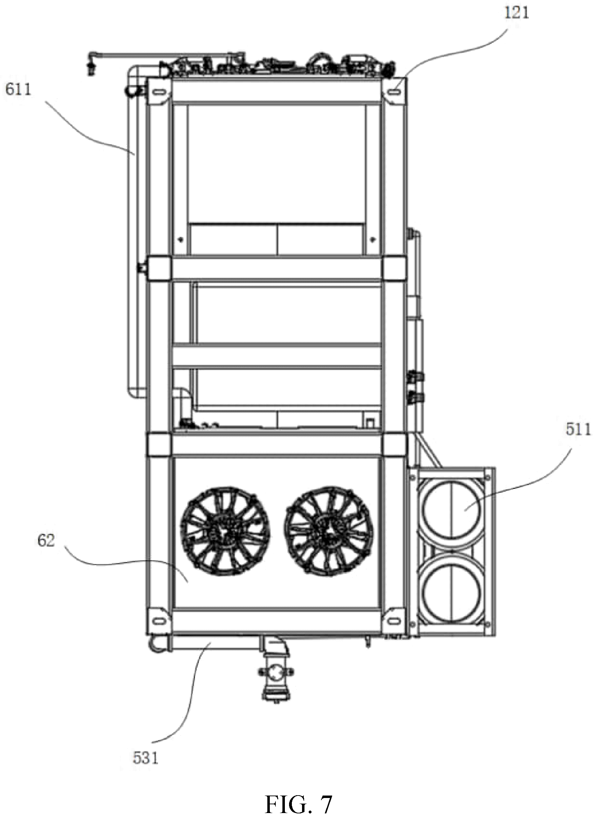

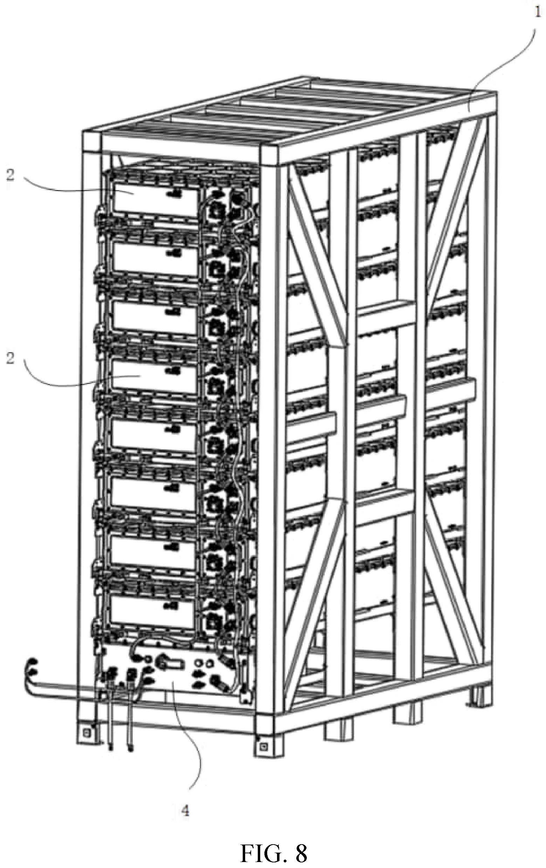

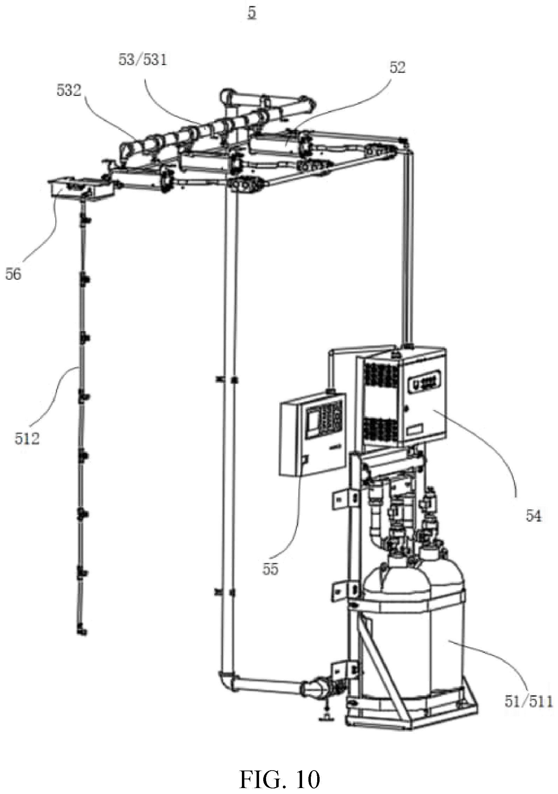

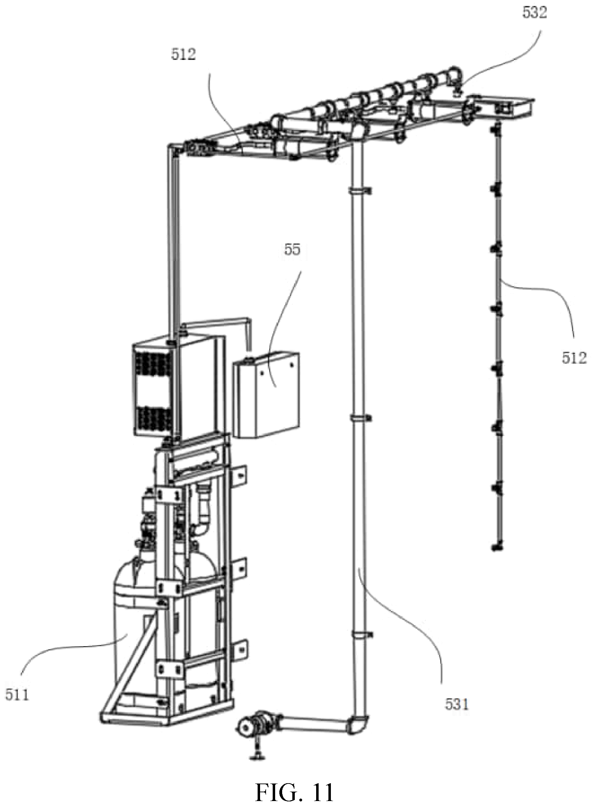

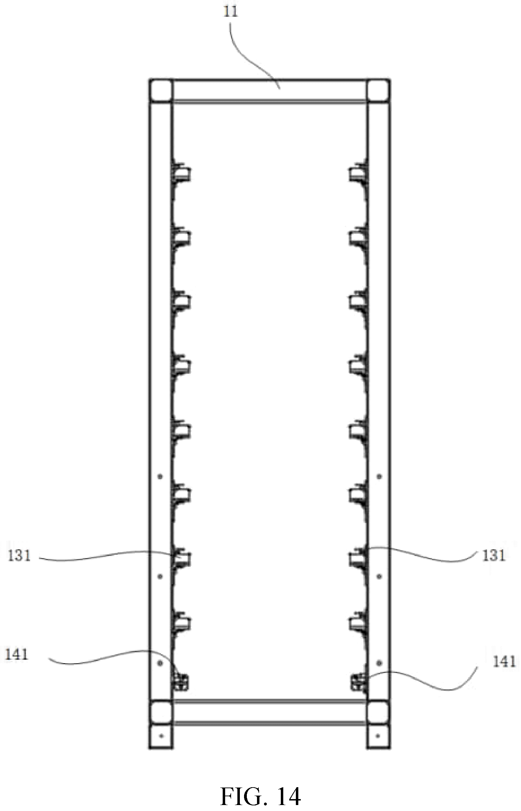

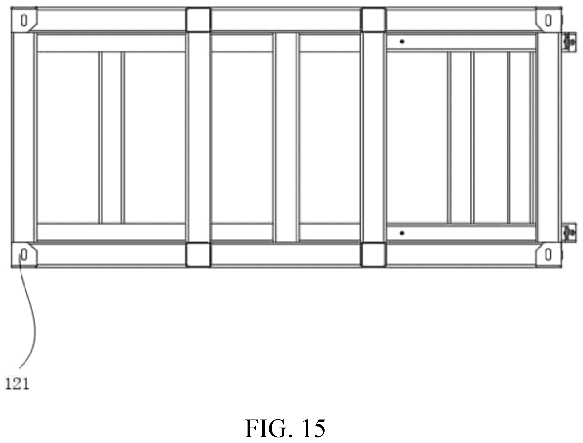

The present disclosure provides a battery cluster, and FIG. 1 to FIG. 15 are schematic structural views of the battery cluster provided by the present disclosure.

Referring to FIGS. 1-3, a battery cluster 100 includes a battery rack 1, a plurality of battery packs 2, a high-voltage box 4 and a fire suppression system 5.

The battery rack 1 serves as a support structure for fixing and arranging other components.

A plurality of battery packs 2 are mounted on the battery rack 1 and interconnected to each other with high-voltage cables 3 in series or parallel, supplying a desired voltage and capacity.

The high-voltage box 4 is also mounted on the battery rack 1, and connected to a plurality of interconnected battery packs 2 with high-voltage cables 3, so as to ensure effective transmission and management of power. Specifically, the high-voltage box 4 is internally installed with a fuse and a battery management system (BMS), which are connected to the battery packs 2 for electrical management of battery packs 2 in a whole module and provide electrical safety protection. The interfaces connecting the battery packs 2 in a whole module to the high-voltage box 4 are in a type of B+ and B-, and electric current flows out from the interfaces P+ and P- after passing through the high-voltage box 4. In addition, each battery pack 2 is further connected with signal lines 7 for transmitting collected voltage and temperature data. The data are then transmitted to the built-in BMS of the high-voltage box 4, which manages and monitors the entire battery cluster 100.

The fire suppression system 5 is integrated in the battery rack 1, providing immediate fire protection to address possible thermal runaway or other emergencies within individual battery clusters 100.

In the technical solution of the present disclosure, by means of integrating the fire suppression system 5 independently within the battery cluster 100, a thermal safety management at the level of the battery pack 100 is realized and security of each battery cluster 100 is improved.

It can be understood that, by means of integrating the independent fire suppression system 5 in each battery cluster 100, safety of the battery energy-storage system during verification, authentication and testing at a level of module may be ensured. During operation of the battery energy-storage system, the independent fire suppression system 5 is capable of more quickly identifying and responding to an abnormal condition within individual battery cluster 100, reducing time interval from detection to taking action, improving emergency handling efficiency. If thermal runaway occurs in the battery packs 2 in one battery cluster 100, the independent fire suppression system 5 may take measures rapidly to prevent fault(s) from spreading to other modules, thereby reducing the possibility of overall damage to the system. The presence of the independent fire suppression system 5 may significantly improve reliability and safety of the battery energy-storage system. Even if a fault occurs in one module, normal operation of other modules may be ensured as much as possible, reducing downtime and economic loss. During operation of the system, the independent fire suppression system 5 may allocate resources more precisely according to actual needs for fire suppression operations, avoiding unnecessary resource waste, while better adapting to differences between individual modules. In general, the fire suppression system 5 is independently integrated in the battery cluster 100 to achieve thermal safety management at a level of the battery cluster 100, and improve the security of each battery cluster 100. Not only higher security assurance is provided during the test phase, but also the stability and security of the system are enhanced during operation of the battery energy-storage system, thereby improving overall performance of the battery energy-storage system.

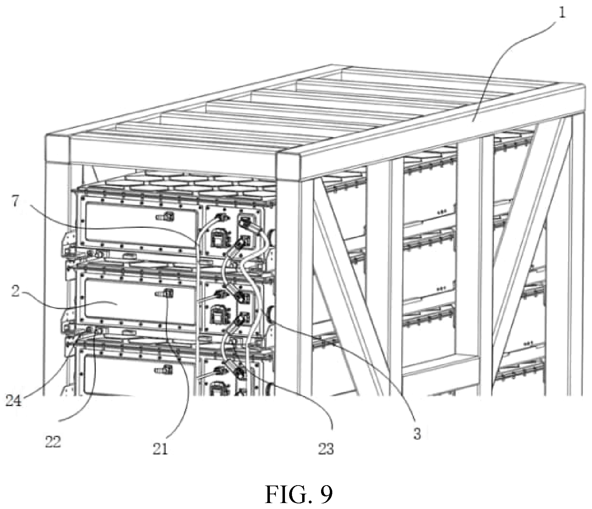

In some available implementations, referring to FIGS. 9-11, each battery packs 2 is provided with a plurality of gas fire-suppression inlets 21; the fire suppression system 5 comprises an in-packet type gas fire-suppression device 51, which comprises a fire-suppression gas cylinder 511 and a fire-suppression gas pipeline 512 both fluidly connected to the fire-suppression gas cylinder 511, and the fire-suppression gas pipeline 512 is provided with a plurality of fire-suppression interfaces respectively fluidly connected to the plurality of gas fire-suppression inlets 21. In such available implementations, the fire-suppression gas cylinder 511 is a core component of the fire suppression system 5. The fire suppression gas stored in the fire-suppression gas cylinder 511 includes perfluoroacetone, heptafluoropropane, nitrogen, and etc., which can be rapidly released in case of fire to suppress flames and prevent fire from spreading. The fire-suppression gas pipeline 512 connects the fire-suppression gas cylinder 511 with the gas fire-suppression inlets 21 of each battery pack 2, ensuring accurate delivery of the fire suppression gas into each battery pack 2 to be protected. A plurality of fire-suppression interfaces are provided on the fire-suppression gas pipeline 512, which is in a one-to-one relationship with the gas fire-suppression inlets 21 of each battery pack 2, and are connected thereto. When the in-packet type gas fire-suppression device 51 is activated, the fire suppression gas is released from the fire-suppression gas cylinder 511 through the fire-suppression gas pipeline 512 and directly flows into the battery pack 2 via the fire-suppression interfaces, thereby ensuring efficient and direct delivery of the fire suppression gas, forming a rapid gas coverage inside the battery pack 2, effectively suppressing potential thermal runaway or fire conditions, improving fire-fighting efficiency, and ensuring safe operation of the battery cluster 100.

In some available implementations, the fire suppression system 5 further comprises an aerosol fire-extinguishing device 52 located above the plurality of battery packs 2 and the high-voltage box 4. In such available implementations, the aerosol fire-extinguishing device 52 is a fire-extinguishing technology that uses aerosol particles. It can rapidly generate a large amount of aerosol particles at the scene of a fire accident, and these particles can effectively isolate oxygen to reduce temperature, so as to rapidly extinguish the fire. The aerosol fire-extinguishing agent usually contains solid microparticles and gas which can be dispersed and fill up space when released, and thus are relatively safe for electrical appliance and leaves no residue. The aerosol fire-extinguishing device 52 is installed above the plurality of battery packs 2 and the high-voltage box 4, so as to cover the entire protected area in case of a fire accident. In case the in-packet type gas fire-suppression device 51 fails or cannot completely extinguish the fire, the aerosol fire-extinguishing device 52 may rapidly intervene to provide additional fire-suppression capability, more comprehensive fire protection and enhance safety and reliability of the system.

In some available implementations, the fire suppression system 5 further includes a water spray fire-extinguishing device 53. The water spray fire-extinguishing device 53 includes a fire-suppression water pipeline 531 and a spraying head 532. One end of the fire-suppression water pipeline 531 is configured to be connected to a fire-suppression water supply, another end of the fire-suppression water pipeline 531 is connected to the spraying head 532, and the spraying head 532 is located above the plurality of battery packs 2 and the high-voltage box 4. In such available implementations, the water spray fire-extinguishing device 53 provides a multi-stage fire suppression capability. Water, as a traditional and efficient fire-extinguishing medium, can quickly reduce the temperature of the fire scene. For both early-stage fires and large-scale fires, the water spray fire-extinguishing device 53 can provide a rapid cooling effect, effectively suppress the propagation of the fire. Even if the in-packet type gas fire-suppression device 51 and the aerosol fire-extinguishing device 52 have been activated, the water spray fire-extinguishing device 53 can carry out physical cooling thereafter, to ensure that the fire is completely suppressed. The water spray fire-extinguishing device 53 also provides supplementary fire extinguishing effects, and water can directly act on most combustibles, including battery materials, to ensure that comprehensive fire-extinguishing effects can be achieved even under complex fire situations, and it can also cool down the surrounding environment in case of a fire accident, to prevent the further propagation of the fire and protect peripheral equipment, so as to reduce losses. In this way, by means of combining different types of fire suppression devices, a multi-layered protection system can be established, so that other systems can promptly take over even if one type of fire suppression means fails, thereby improving the safety and stability of the entire system.

It can be understood that, the fire suppression system 5 may further include a fire-suppression power supply 54, and a fire-suppression host 55. The fire-suppression power supply 54 provides uninterrupted electric power for the entire fire suppression system 5, which is capable of immediately switching to another power supply when the main power fails, so as to maintain continuous operation of the fire suppression system 5. The fire-suppression host 55 serves as a command center for the entire fire suppression system 5, responsible for monitoring, controlling and managing operations of all fire-suppression devices, receiving signals from the fire detectors, automatically starting corresponding fire-suppression devices, and monitoring their operating states. By stable power supply of the fire-suppression power supply 54, intelligent control of the fire-suppression host 55, and cooperative action among three types of fire-suppression devices, including gas, aerosol and water spraying, the fire suppression system 5 can effectively respond to possible risks of fires in the battery cluster 100, ensuring safe operation of the battery cluster 100.

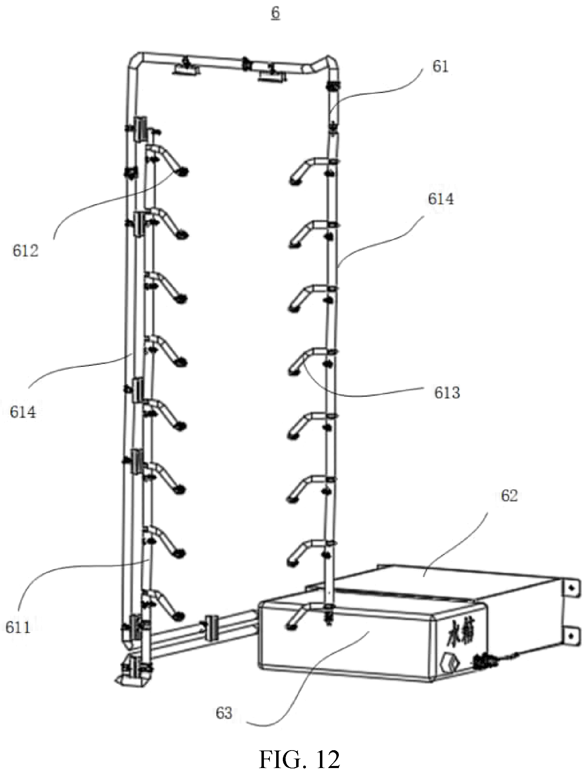

In some available implementations, referring to FIG. 9 and FIG. 12, each battery pack 2 is provided with a liquid-cooling inlet 22 and a liquid-cooling outlet 23; the battery cluster 100 further includes a liquid cooling system 6 comprising a liquid-cooling pipeline 61 and a liquid-cooling unit 62, the liquid-cooling pipeline 61 includes a primary water inlet pipeline 611, a plurality of secondary water inlet pipelines 612, a plurality of secondary water return pipelines 613 and a primary water return pipeline 614, wherein one ends of the plurality of secondary water inlet pipelines 612 are respectively fluidly connected to the primary water inlet pipeline 611, the other ends of the plurality of secondary water inlet pipelines 612 are respectively fluidly connected to the plurality of liquid-cooling inlets 22, one ends of the plurality of secondary water return pipelines 613 are respectively fluidly connected to the plurality of liquid cooling outlets 23, and the other ends of the plurality of secondary water return pipelines 613 are respectively fluidly connected to the primary water return pipeline 614; the liquid cooling set 62 is configured to cool the coolant flowing out from the primary water return pipeline 614, and allow the cooled coolant to enter the primary water inlet pipeline 611. In such available implementations, the coolant flows out from the cooling device of the liquid-cooling unit 62 at a lower temperature,

The coolant is distributed to a plurality of secondary water inlet pipelines 612 through the primary water inlet pipeline 611, and then enters the liquid-cooling inlet 22 of each battery pack 2. In the battery pack 2, the coolant flows through the batteries and absorbs heat generated by operation of the batteries. The heated coolant flows out from the liquid-cooling outlet 23 of the battery pack 2, and is collected in primary water return pipeline 614 through the secondary water return pipelines 613. The heated coolant is returned to the liquid-cooling unit 62 for cooling, and the heat is dissipated through components such as a heat exchanger, so that the temperature of the coolant decreases again. The cooled coolant enters the primary water inlet pipeline 611 again, and thus starts a new cycle. This design of the liquid cooling system 6 can accurately deliver the coolant to the interior of each battery pack 2, effectively control the temperature of the batteries in the battery pack 2, improve performance and service life of the batteries, and ensure stability and safety of operation of the battery cluster 100.

In some available implementations, the liquid cooling system 6 further includes a water supply tank 63 fluidly connected to the primary water inlet pipeline 611 and/or the primary water return pipeline 614 through a valve. In such available implementations, the water supply tank 63 replenishes coolant lost in the cooling circulation system due to evaporation or leakage, and maintains an appropriate level of coolant in the cooling circulation system. The water supply tank 63 is fluidly connected to the primary water inlet pipeline 611 or the primary water return pipeline 614, and inflows and outflows of the coolant are controlled by the valve. In this way, it can be ensured that when the amount of coolant decreases during operation, the coolant can be timely replenished, thereby avoiding decrease in heat dissipation efficiency or damage to device caused by insufficient coolant.

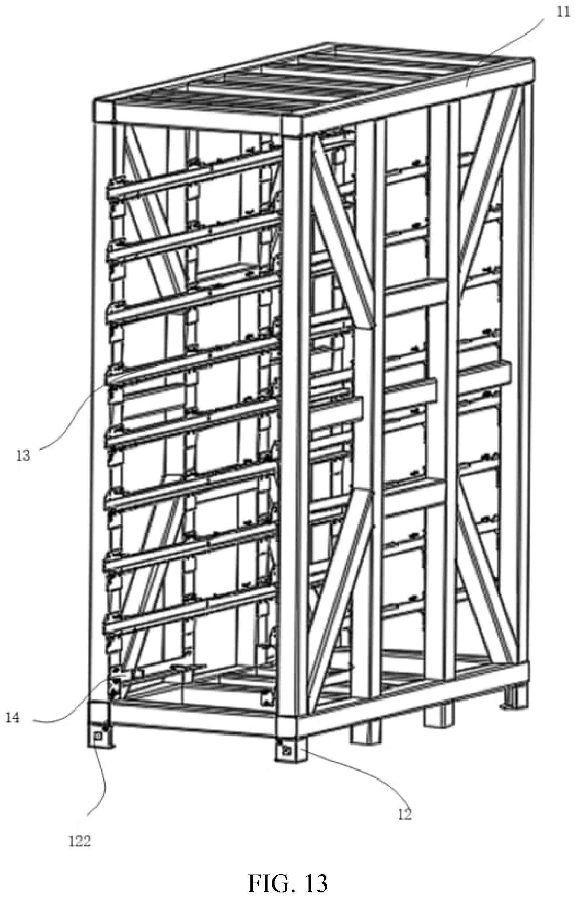

In some available implementations, referring to FIGS. 13-15, the battery rack 1 includes a rack body 11 and a foot structure 12. The rack body 11 is provided with an installation cavity in which a plurality of battery packs 2 and a high-voltage box 4 are disposed. The foot structure 12 is connected to the rack body 11, and the foot structure 12 is provided with a mounting hole 121 through which fasteners are inserted, so that the battery cluster 100 can be detachably connected to the prefabricated compartment of the battery energy-storage system. In some available implementations, the rack body 11 is a main structural part of the battery rack 1, and thus provides rigidity and support. The installation cavity is designed in the rack body 11 to accommodate and fix a plurality of battery packs 2 and high-voltage boxes 4, ensuring safe and stable installation of the battery pack 2 and the high-voltage box 4. The foot structure 12 is connected at the bottom of the rack body 11 to increase stability of the entire battery rack 1. The mounting holes 121 are provided on the foot structure 12 for fasteners (such as bolts or screws) passing therethrough. When the battery cluster 100 needs to be connected to a prefabricated compartment of the battery energy-storage system, the fasteners are passed through the mounting holes 121 to achieve detachable connection between the battery cluster 100 and the prefabricated compartment. The detachable connection allows the battery cluster 100 to be quickly installed and disassembled between different scenarios or positions, facilitating transportation and field deployment. The detachable connection also facilitates extension of the battery energy-storage system, allowing easy addition or removal of the battery cluster 100 as demand. By means of the afore-mentioned design, the battery rack 1 not only provides stable support and protection for the battery pack 2 and the high-voltage box 4, but also achieves quick and detachable connection with the prefabricated compartment of the battery energy-storage system via the mounting hole 121 on the foot structure 12, improving overall flexibility and maintenance efficiency of the system. Specifically, the mounting hole 121 is a hourglass-shaped hole. The hourglass-shaped hole is a noncircular design of a hole, and usually has an elliptical shape or other similar shapes. Compared with a circular hole, the hourglass-shaped hole has a larger contact area to improve connection stability and shear resistance. The design of the hourglass-shaped hole can reduce strict requirements on the diameter and thread during assembly to some extent, thereby improving flexibility and fault tolerance in assembly. By adjusting the size and shape of the hourglass-shaped hole, load distribution of the fastener to the foot structure 12 may be optimized to reduce stress concentration, so that the connection between the battery cluster 100 and the prefabricated compartment of the battery energy-storage system becomes more reliable and convenient.

In some available implementations, the battery rack 1 further includes a plurality of first guide rail groups 13. Each first guide rail group 13 includes two first mounting guide rails 131 respectively arranged on opposite cavity walls of the installation cavity, and the two first mounting guide rails 131 jointly support the corresponding battery pack 2. In such available implementations, the two first mounting guide rails 131 are respectively disposed on opposite cavity walls of the installation cavity, to form a symmetrical layout. The two first mounting guide rails 131 jointly support the corresponding battery pack 2, so as to ensure balanced support for the battery pack 2 and stability thereof in the installation cavity, and ensure that the battery pack 2 can still be stable when it is impacted or vibrated by an external force, thereby reducing risks of movement or tilting. The symmetrically distributed first mounting guide rails 131 also provide guiding function for the battery pack 2, facilitating sliding installation and disassembly of the battery pack 2, improving stability, safety and maintenance efficiency.

In some available implementations, the battery rack 1 further includes second guide rail group 14 comprising two second mounting guide rails 141, and the second mounting guide rails 141 are respectively arranged on opposite cavity walls of the installation cavity, and thus jointly support the high-voltage box 4. In such available implementations, the two second mounting rails 141 are symmetrically arranged on two opposite cavity walls of the mounting chamber to ensure even support and stable fixing of the high-voltage box 4, ensuring safe positioning of the high-voltage box 4 in the battery rack 1 and avoiding safety risks caused by vibration or movement. The second guide rail group 14 also has a guiding function, facilitating installation and disassembly of the high-voltage box 4. It can be understood that, the high-voltage box 4 usually includes critical components such as a BMS, and the design of the second guide rail group 14 makes maintenance and inspection of the high-voltage box 4 more convenient, improving maintainability of the system.

In some available implementations, referring to FIGS. 9 and 13, each battery pack 2 is provided with grounding terminals 24, and the foot structure 12 is further provided with a grounding point 122, wherein the grounding point 122 is connected to a plurality of grounding terminals 24 respectively. In such available implementations, the grounding terminals 24 are disposed on the battery pack 2 to provide a low impedance path, so as to quickly guide an abnormal current to the ground when an electrical fault occurs, thereby protecting the batteries and circuits from damage, and ensuring the safety of the operator. The grounding point 122 is disposed on the foot structure 12 of the battery rack 1 as part of the grounding system, the grounding point 122 is connected to the grounding terminal 24 of the battery pack 2, to form a common grounding plane, which ensures the safety of the electrical system. It should be noted that, the number of grounding points 122 is not specifically defined in the present disclosure. For example, a plurality of grounding points 122 may be provided and each of the plurality of grounding points 122 is connected to one of the plurality of ground terminals 24 of the plurality of battery packs 2 respectively. Such design facilitates distributing grounding current, reduces pressure on a single connection point, improves grounding continuity and reliability of an entire system, and also helps maintain equipotentiality of an electrical system to reduce risk of electric shock caused by potential difference. For another example, the number of the grounding points 122 is less than the number of the battery packs 2 (their ground terminals 24). By means of appropriate electrical connections, remaining battery packs 2 share such grounding points 122, so as to form effective grounding paths. Alternatively, compensation can be performed through increasing cross-sectional area of a grounding wire or optimizing a grounding path to maintain sufficient grounding capacity and reduce contact resistance. That is, the number of the grounding points 122 depends on scale, design requirements and safety standards of the battery energy-storage system, which can be determined according to specific design specifications and safety requirements.

The present disclosure further provides a battery energy-storage system, comprising the afore-mentioned battery clusters 100 in which the fire suppression system 5 is independently integrated, improving the safety of individual battery clusters 100, thereby effectively enhancing the safety of the battery energy-storage system.

## Claims

1. A battery cluster (100), comprising:
a battery rack (1);
a plurality of battery packs (2), disposed on the battery rack (1), wherein the plurality of battery packs (2) are interconnected to each other with high-voltage cables (3);
a high-voltage box (4), disposed on the battery rack (1) and configured to be connected to the plurality of interconnected battery packs (2) with high-voltage cables (3); and
a fire suppression system (5) disposed on the battery rack (1).

2. The battery cluster (100) according to claim 1, wherein each of the plurality of battery packs (2) is provided with a plurality of gas fire-suppression inlets (21);
the fire suppression system (5) comprises an in-packet type gas fire-suppression device (51) comprising a fire-suppression gas cylinder (511) and a fire-suppression gas pipeline (512) both fluidly connected to the fire-suppression gas cylinder (511), wherein the fire-suppression gas pipeline (512) is provided with a plurality of fire-suppression interfaces respectively fluidly connected to the plurality of gas fire-suppression inlets (21).

3. The battery cluster (100) according to claim 2, wherein the fire suppression system (5) further comprises an aerosol fire-extinguishing device (52) located above the plurality of battery packs (2) and the high-voltage box (4).

4. The battery cluster (100) according to claim 3, wherein the fire suppression system (5) further comprises a water spray fire-extinguishing device (53), the water spray fire-extinguishing device (53) comprises a fire-suppression water pipeline (531) and a spraying head (532), a first end of the fire-suppression water pipeline (531) is configured to be connected to a fire-suppression water supply, a second end of the fire-suppression water pipeline (531) is connected to the spraying head (532), and the spraying head (532) is located above the plurality of battery packs (2) and the high-voltage box (4).

5. The battery cluster (100) according to any one of claims 1-4, wherein each of the plurality of battery packs (2) is provided with a liquid-cooling inlet (22) and a liquid-cooling outlet (23);
the battery cluster (100) further comprises a liquid cooling system (6) comprising:
a liquid-cooling pipeline (61), comprising a primary water inlet pipeline (611), a plurality of secondary water inlet pipelines (612), a plurality of secondary water return pipelines (613), and a primary water return pipeline (614), wherein each first end of the plurality of secondary water inlet pipelines (612) is respectively fluidly connected to the primary water inlet pipeline (611), each second end of the plurality of secondary water inlet pipelines (612) is respectively fluidly connected to the plurality of liquid-cooling inlets (22), each first end of the plurality of secondary water return pipelines (613) is respectively fluidly connected to the plurality of liquid-cooling outlets (23), and each second end of the plurality of secondary water return pipelines (613) is respectively fluidly connected to the primary water return pipeline (614); and
a liquid-cooling unit (62), configured to cool a coolant flowing out from the primary water return pipeline (614), and allow the cooled coolant to enter the primary water inlet pipeline (611).

6. The battery cluster (100) according to claim 5, wherein the liquid cooling system (6) further comprises a water supply tank (63) fluidly connected to the primary water inlet pipeline (611) and/or the primary water return pipeline (614) through a valve.

7. The battery cluster (100) according to any one of claims 1 to 6, wherein the battery rack (1) comprises:
a rack body (11), provided with an installation cavity, wherein the installation cavity accommodates the plurality of battery packs (2) and the high-voltage box (4); and
a foot structure (12), connected to the rack body (11), wherein the foot structure (12) is provided with a mounting hole (121) through which fasteners are inserted, so that the battery cluster (100) is detachably connected to a prefabricated compartment of a battery energy-storage system.

8. The battery cluster (100) according to claim 7, wherein the battery rack (1) further comprises:
a plurality of first guide rail groups (13), wherein each of the plurality of first guide rail groups (13) comprises two first mounting guide rails (131) respectively arranged on opposite cavity walls of the installation cavity, and the two first mounting guide rails (131) jointly support the corresponding battery pack (2); and/or
a second guide rail group (14), comprising two second mounting guide rails (141) respectively arranged on opposite cavity walls of the installation cavity, and the two second mounting guide rails (141) jointly support the corresponding high-voltage box (4).

9. The battery cluster (100) according to claim 7, wherein each of the battery packs (2) is provided with grounding terminals (24), and the foot structure (12) further comprises a grounding point (122) connected to the grounding terminals (24) respectively.

10. A battery energy-storage system, comprising the battery clusters (100) according to any one of claims 1 to 9.
